# EUROPEAN PATENT APPLICATION

(11) **EP 4 803 463 A1**
(43) Date of publication of application: **09.09.2026**
(21) Application number: 24890006.0
(22) Date of filing: 13.05.2024
(51) Int. Cl.: B65H 37/04

(54) **DRYING OVEN SYSTEM, AND CURRENT COLLECTOR PASSING-THROUGH CONTROL METHOD FOR DRYING OVEN SYSTEM**

(30) Priority: 17.11.2023 CN 202311541373
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: LUO, Yu, Ningde, Fujian 352100 (CN); GAO, Congying, Ningde, Fujian 352100 (CN); CHEN, Yunbo, Ningde, Fujian 352100 (CN)
(74) Representative: Kraus & Lederer PartGmbB
(86) International application number: PCT/CN2024/092861
(87) International publication number: WO 2025/102635

(57) **Abstract**

Embodiments of the present application relate to the field of control, and provide a drying oven system, and a current collector passing-through control method for a drying oven system. The system compr i ses: an oven body, wherein a drying cavity is formed in the oven body, and a current collector inlet and a current collector outlet which are communicated with the drying cavity are formed in the oven body; a traction device passing through the drying cavity; a fixing part connected to the traction device; and a controller configured to control, when a current collector is fractured, a coating system to push a first fractured section of the current collector out to a first side outside the oven body and pull a second fractured section of the current collector out to a second side outside the oven body, and control the traction device and the fixing part to pull the first fractured section, which is fixed to the fixing part, to pass through the drying cavity, wherein the second side is a side in the opposite direction of the first side, and the first side or the second side is a current collector inlet side.

## Description

The present application claims priority to Chinese Patent Application No. 202311541373.5, entitled "DRYING OVEN SYSTEM, AND CURRENT COLLECTOR PASSING-THROUGH CONTROL METHOD FOR DRYING OVEN SYSTEM" with the Chinese Patent Office on November 17, 2023, which is incorporated by reference in the present application.

### TECHNICAL FIELD

The present application relates to the field of control, and particularly relates to a drying oven system and a current collector passing-through control method for the drying oven system.

### BACKGROUND

In a coating system production process, after applying a negative/ positive electrode slurry onto a current collector, the current collector enters a drying oven for drying. During the drying process, various factors may cause the current collector to fracture. If fracture occurs, it is needed to stop the machine and manually tape the current collector, and then the operation can continue.

In related technology, if the fracture occurs inside the drying oven, maintenance personnel need to manually pull the fractured tape (the fractured current collector) through the entire drying oven to perform taping outside the drying oven. The process of taping and operation recovery is very complicated and time-consuming, and there are certain safety risks.

The above are solely to offer background technical information related to the present application and do not necessarily constitute existing technologies.

### SUMMARY OF THE INVENTION

The present application provides a drying oven system and a current collector passing-through control method for a drying oven system, which can automatically pull a fractured current collector to pass through a drying oven, thus realizing quick production recovery, and greatly reducing potential injury suffered by maintenance personnel.

In a first aspect, the present application provides the drying oven system, which includes: an oven body in which a drying chamber is formed, a current collector inlet and a current collector outlet which are in communication with the drying chamber being formed in the oven body; a traction apparatus passing through the drying chamber; a fixing component connected to the traction apparatus; and a controller configured to control, when a current collector is fractured, a coating system to push a first fractured section of the current collector out to a first side outside the oven body and pull a second fractured section of the current collector out to a second side outside the oven body, the second side being a side opposite to the first side, and the first side or the second side being a current collector inlet side; and control the traction apparatus and the fixing component to pull the first fractured section that is fixed to the fixing component to pass through the drying chamber.

In the technical solution of this embodiment of the present application, the traction apparatus passes through the drying chamber and the fixing component connected to the traction apparatus are arranged and can be controlled to pull the first fractured section, which is fixed to the fixing component, to pass through the drying chamber. The traction apparatus passes through the drying oven, and the fixing component is connected to the traction apparatus; therefore, as the fixing component moves, the fractured current collector is pulled to pass through the drying oven, thereby replacing the process that the maintenance personnel open a drying oven door to manually pull it to pass through the drying oven. As a result, the personnel do not come into direct contact with the drying oven system, greatly reducing the likelihood of potential risks such as high-temperature injuries, NMP (N-Methylpyrrolidone) exposure, and mechanical crush injuries. On the other hand, because the personnel do not need to contact the drying oven system, the band passing can be performed directly at working temperature, eliminating the process of waiting for the drying oven to cool down and then raise to working temperature, greatly shortening downtime and also significantly reducing heat waste, saving energy.

In some embodiments, the traction apparatus includes: a traction component which passes through the drying chamber, is parallel to a current direction of the current collector in the drying chamber and is connected to the fixing component; and a driving component which is configured to, according to a control instruction of the controller, drive the traction component and the fixing component to move to pull the first fractured section to pass through the drying chamber. The driving component can drive the traction component and fixing component to move to automatically pass the fractured collector through the drying oven, thereby achieving rapid production recovery while greatly reducing the potential injuries to the maintenance personnel.

In some embodiments, the drying oven system further includes: a label which is arranged on the traction component at a position connected to the fixing component; and a first label sensor which is arranged on the second side and configured to detect the label on the traction component; the controller is further configured to take down the first fractured section from the fixing component and perform current collector connection on the first fractured section and the second fractured section when the first label sensor detects the label on the traction component. By means of sensing the position of the fixing component using the label sensor, a cross rod fixing component can be positioned, making it convenient to take down the fractured current collector from the fixing component at a tail side of a machine and perform current collector connection on the first fractured section and the second fractured section. Thus, by means of sensing the label through the label sensor, it can be accurately determined that a fractured tape is removed to the outside of the drying oven, such that current collector connection can be performed on the first fractured section and the second fractured section.

In some embodiments, the controller is further configured to control the driving component to drive the traction component to move after performing current collector connection on the first fractured section and the second fractured section, so as to pull back the fixing component to an initial position on the first side and stop the movement of the traction component. By automatically moving the fixing component back to the initial positions, preparation can be made for the next passing (the fractured current collector passes through the drying oven).

In some embodiments, the drying oven system further includes: a second label sensor which is arranged on the first side and configured to detect the label on the traction component; and the controller is further configured to determine that the fixing component returns to the initial position on the first side when the second label sensor detects the label on the traction component, and stop the movement of the traction component. The position of the fixing component is sensed by the label sensor, thus the fixing component can be automatic positioned with high accuracy, and the fractured tape can be conveniently fixed to the fixing component during next passing.

In some embodiments, the label can be a color code; and both the first label sensor and the second label sensor are color code sensors. In the embodiments, the color code sensors are configured to sense the position of the fixing component to realize automatic positioning of the fixing component, making it is convenient to fix the fractured tape on the fixing component. The color code sensors are configured to control the fixing part to stop in a tape receiving position before entering the drying oven and a tape connection position after leaving the drying oven.

In some embodiments, the controller can be configured to control the driving component to drive the traction component and the fixing component to move to pull the first fractured section to pass through the drying chamber from the first side to the second side at a constant speed. The tape passing speed is controlled as a constant speed, thus improving the tape passing success rate and efficiency.

In some embodiments, the fixing component can be a pull rod or a cross bar; and the arrangement direction of the fixing component is perpendicular to the traction component and parallel to the current direction of the current collector. The specific composition and the arrangement direction of the fixing component are limited, thus the cross bar can be driven through the traction component, and the cross bar drives the fractured tape to automatically realize passing the current collector through the drying oven.

In some embodiments, at least one traction component is provided; and if one traction component is provided, the traction component is connected to the fixing component at a middle position in a length direction of the fixing component. One traction component is connected to the fixing component at the middle position in the length direction of the fixing component. Therefore, the fixing component and the fractured current collector can be pulled only through one traction component.

In some embodiments, if two traction components are provided, the two traction components are parallel to each other, and are connected to the fixing component from both sides of the fixing component in the length direction. The two traction components are connected to the fixing component from both sides of the fixing component in the length direction correspondingly, and therefore the two traction components on both sides of the fixing component in the length direction can act together to pull the fixing component, and the fixing component and the fractured current collector can be driven more stably.

In some embodiments, if three traction components are provided, and the at least three traction components are parallel to each other; two traction components are connected to the fixing component from both sides of the fixing component in the length direction, and the other traction components are uniformly connected between both sides of the fixing component. The at least three traction components are uniformly connected to the fixing component in the length direction, and therefore the at least three traction components in the length direction of the fixing component can act together to pull the fixing component, and the fixing component and the fractured current collector can be achieved more stably.

In some embodiments, the traction components are in a closed shape, and the traction components include parts passing through the drying chamber and parts outside the oven body, and the parts passing through the drying chamber and the parts outside the oven body form the closed shape; the traction apparatus further includes guide wheels, and each traction component bypasses at least two guide wheels. The closed traction components bypass the at least two guide wheels to rotate, thus facilitating the traction components to pull the fixing component and the fractured current collector to move.

In some embodiments, each traction component bypasses four guide wheels to form a rectangle; the traction component on the upper middle of the rectangle passes through the drying chamber, the traction component on the lower middle of the rectangle is located on the outside bottom of the oven body, the traction component on the left middle of the rectangle is located on the second side outside the oven body, and the traction component on the right middle of the rectangle is located on the first side outside the oven body; the four guide wheels are located at the four vertexes of the rectangle respectively, and in a clockwise direction from the guide wheel below the second side, the four guide wheels are a first guide wheel, a second guide wheel, a third guide wheel, and a fourth guide wheel in sequence; and the first label sensor is arranged on the second guide wheel, and the second label sensor is arranged on the third guide wheel. By limiting the positions of the four guide wheels and the label sensors, as the closed rectangular traction components rotate, the fixing component and the fractured current collector can be automatically pulled, making the fractured current collector convenient to pass through the drying oven.

In some embodiments, the driving component includes: a tension sensor which is arranged on any one of the at least two guide wheels which each traction component bypasses and is configured to detect the tension borne by the guide wheel; driving wheels, each diving wheel being arranged on the outer side of one traction component and configured to drive the traction component to rotate; and a variable frequency motor which is configured to drive the driving wheels to rotate and then drive the traction components to rotate; the controller is further configured to compare a measured value of the current tension sensor with a target tension value; if the measured value of the current tension sensor is greater than the target tension value, an input control value of the variable frequency motor is reduced; and if the measured value of the current tension sensor is less than the target tension value, the input control value of the variable frequency motor is increased to enable the first fractured section to pass through the drying chamber from the first side to the second side at a constant speed. According to the embodiment, the traction components are driven through the tension sensor, variable frequency motor, driving wheel and PID (Proportional-Integral-Derivative) control method, specifically, the tension sensor is configured to detect control over traction force in the traction process, and control the current collector to move at a constant speed, therefore, the risk that the current collector is fractured again when being pulled is greatly reduced, and moreover, the traction speed can be automatically adjusted through closed-loop control over the tension and the traction speed, thus improving the tape passing efficiency.

In some embodiments, the tension sensor is arranged on the guide wheel, closest to the driving wheels, of at least two guide wheels which each traction component bypasses. The tension sensor is arranged on the guide wheel closest to the driving wheels, and therefore control over the speed can be achieved more accurately.

In some embodiments, the driving component includes: the driving wheels, each driving wheel being arranged on the outer side of the corresponding traction component and configured to drive the traction component to rotate; and a servo motor which is configured to drive the driving wheels to rotate and then drive the traction components to rotate; the controller is further configured to obtain the current of the servo motor, determine the actual torque value of the servo motor, compare the actual torque value with the needed torque, reduce the current of the servo motor when the actual torque value is greater than the needed torque, and increase the current of the servo motor when the actual torque value is smaller than the needed torque to enable the first fractured section to pass through the drying chamber from the first side to the second side at a constant speed. The traction components are driven through the servo motor, driving wheel and PID control method; and the driving wheels are driven by the servo motor, the current collector is pulled to pass through the drying chamber in a constant-speed mode, and the pulling force is controlled through the servo torque feedback value. The current collector can be controlled to move at a constant speed, thus the risk that the current collector is fractured again when being pulled is greatly reduced, the traction speed is automatically adjusted, and the tape passing efficiency is improved. Compared with the tension sensor, variable frequency motor, driving wheel and PID control methods, the process and cost of arranging the tension sensor can be saved.

In some embodiments, the traction components are in a non-closed shape, and the traction components include parts passing through the drying chamber; the driving component includes: first hoisting mechanisms arranged on the first side; and second hoisting mechanisms arranged on the second side; each traction component is connected to one first hoisting mechanism and one second hoisting mechanism; and the controller is further configured to control the second hoisting mechanisms to retract the traction components and control the first hoisting mechanisms to release the traction components after the first fractured section is fixed to the fixing component, and the first fractured section is pulled to pass through the drying chamber by the traction components and the fixing component. Each traction component is connected to one hoisting mechanism on a current collector inlet side and one hoisting mechanism on a current collector outlet side. By retracting and releasing the traction components using the hoisting mechanisms, the non-closed traction components can be adopted to pull the fixing component and the fractured current collector, thus that the fractured current collector can be automatically transferred to pass through the drying oven on the basis of reducing the lengths of the traction components and reducing occupation in the external space of the drying oven.

In some embodiments, the traction components are pull ropes or steel cables. The driving component drives the pull ropes, the pull ropes drive the cross bars, the cross bars drive the fractured tapes, and the fractured tapes are pulled to pass through the drying oven, thus realizing quick production recovery.

In a second aspect, the present application provides the current collector passing-through control method for a drying oven system; and the method includes: if the current collector is fractured, controlling the coating system by the controller to push the first fractured section of the current collector to the first side outside the oven body and to pull the second fractured section of the current collector to the second side outside the oven body, in which, the drying oven system includes the controller and the oven body, the drying chamber is formed in the oven body, the current collector inlet and the current collector outlet which are in communication with the drying chamber are formed in the oven body, the second side is the side opposite to the first side, and the first side or the second side is the current collector inlet side; and controlling the traction apparatus and the fixing component by the controller to pull the first fractured section that is fixed to the fixing component to pass through the drying chamber, in which, the drying oven system also includes the traction apparatus and the fixing component, the traction apparatus passes through the drying chamber, and the fixing component is connected to the traction apparatus.

In the technical solution of this embodiment of the present application, the traction apparatus passes through the drying chamber and the fixing component connected to the traction apparatus are arranged and can be controlled to pull the first fractured section, which is fixed to the fixing component, to pass through the drying chamber. The traction apparatus passes through the drying oven, and the fixing component is connected to the traction apparatus; therefore, as the fixing component moves, the fractured current collector is pulled to pass through the drying oven, thereby replacing the process that the maintenance personnel open a drying oven door to manually pull it to pass through the drying oven. As a result, the personnel do not come into direct contact with the drying oven system, greatly reducing the likelihood of potential risks such as high-temperature injuries, NMP exposure, and mechanical crush injuries. On the other hand, because the personnel do not need to contact the drying oven system, the band passing can be performed directly at working temperature, eliminating the process of waiting for the drying oven to cool down and then raise to working temperature, greatly shortening downtime and also significantly reducing heat waste, saving energy.

In some embodiments, the controlling the traction apparatus and the fixing component to pull the first fractured section that is fixed to the fixing component to pass through the drying chamber includes: controlling the driving component by the controller to drive the traction components and the fixing component to move and pull the first fractured section to pass through the drying chamber, in which, the traction apparatus includes the traction components and the driving component, and the traction components pass through the drying chamber, are parallel to the current direction of the current collector in the drying chamber, and are connected to the fixing component. The driving component can drive the traction component and fixing component to move to automatically pass the fractured collector through the drying oven, thereby achieving rapid production recovery while greatly reducing the potential injuries to the maintenance personnel.

In some embodiments, the current collector passing-through control method for the drying oven further includes: detecting the labels on the traction components by the controller using the first label sensor, in which, the labels are arranged at the position, connected to the fixing component, on each traction component, and the first label sensor is arranged on the second side; and if the first label sensor detects the labels on the traction components, instructing by the controller to take down the first fractured section from the fixing component, and performing current collector connection on the first fractured section and the second fractured section. Thus, by means of sensing the label through the label sensor, it can be accurately determined that a fractured tape is removed to the outside of the drying oven, such that current collector connection can be performed on the first fractured section and the second fractured section.

In some embodiments, the current collector passing-through control method for the drying oven further includes: after performing current collector connection on the first fractured section and the second fractured section, controlling the driving component by the controller to drive the traction components to move to pull back the fixing component to the initial position on the first side, and stopping the movement of the traction components.

In some embodiments, the pulling back the fixing component to the initial position on the first side includes: detecting the labels on the traction components by the controller using the second label sensor, in which, the second label sensor is arranged on the first side; and if the second label sensor detects the labels on the traction components, determining by the controller that the fixing component returns to the initial position on the first side, and stopping the movement of the traction components. The fixing component automatically moves back to the initial position, and thus preparation can be made for passing the current collector fractured next time through the drying oven.

In some embodiments, the controlling the traction components and the fixing component by the controller to pass the first fractured section that is fixed to the fixing component to pass through the drying chamber includes: controlling the driving component by the controller to drive the traction components and the fixing component to move and pull the first fractured section to pass through the drying chamber from the first side to the second side at a constant speed. The tape passing speed is controlled as a constant speed, thus improving the tape passing success rate and efficiency.

In some embodiments, the pulling the first fractured section to pass through the drying chamber at the constant speed from the first side to the second side includes: driving the driving wheels to rotate by the controller using the variable frequency motor so as to drive traction components to rotate, in which, the traction components are closed traction components, the traction components include parts passing through the drying chamber and parts outside the oven body, the parts passing through the drying chamber and the parts outside the oven body form the closed shape, and each driving wheel is arranged on the outer side of one traction component; detecting the tension borne by the guide wheels by the controller using the tension sensors, in which, each traction component bypasses at least two guide wheels, and the tension sensors are arranged on any one of the at least two guide wheels which each traction component bypasses; comparing the measured value of the current tension sensor with the target tension value by the controller; if the measured value of the current tension sensor is greater than the target tension value, reducing the input control value of the variable frequency motor by the controller; and if the measured value of the current tension sensor is less than the target tension value, increasing the input control value of the variable frequency motor by the controller to enable the first fractured section to pass through the drying chamber at a constant speed from the first side to the second side. The traction components are driven through the tension sensor, variable frequency motor, driving wheel and PID control methods; specifically, the tension sensors are configured to detect control over traction force in the traction process, and control the current collector to move at a constant speed, therefore, the risk that the current collector is fractured again when being pulled is greatly reduced, and moreover, the traction speed can be automatically adjusted through closed-loop control over the tension and the traction speed, thus improving the tape passing efficiency.

In some embodiments, the pulling the first fractured section to pass through the drying chamber at the constant speed from the first side to the second side includes: driving the driving wheels to rotate by the controller using the servo motor, and then driving the traction components to rotate, in which, the traction components are in a closed shape, each traction component includes the part passing through the drying chamber and the part outside the oven body, the part passing through the drying chamber and the part outside the oven body form the closed shape, each driving wheel is arranged on the outer side of the corresponding traction component, and each traction component bypasses at least two guide wheels; obtaining the current of the servo motor by the controller, and determining the actual torque value of the servo motor; comparing the actual torque value with the needed torque by the controller; if the actual torque value is greater than the needed torque, reducing the current of the servo motor by the controller; and if the actual torque value is less than the needed torque, increasing the current of the servo motor by the controller to enable the first fractured section to pass through the drying chamber at the constant speed from the first side to the second side. The traction components are driven through the servo motor, driving wheel and PID control method; and the driving wheels are driven by the servo motor, the current collector is pulled to pass through the drying chamber in a constant-speed mode, and the pulling force is controlled through the servo torque feedback value. The current collector can be controlled to move at a constant speed, thus the risk that the current collector is fractured again when being pulled is greatly reduced, the traction speed is automatically adjusted, and the tape passing efficiency is improved. Compared with the tension sensor, variable frequency motor, driving wheel and PID control methods, the process and cost of arranging the tension sensor can be saved.

In some embodiments, the controlling the traction component and the fixing component by the controller to pull the first fractured section to pass through the drying chamber includes: after fixing the first fractured section to the fixing component, controlling the second hoisting mechanism by the controller to retract the traction components, controlling the first hoisting mechanism to release the traction components, and pulling the first fractured section to pass through the drying chamber through the traction components and the fixing component, in which, the traction components are in the non-closed shape, each traction component includes the part passing through the drying chamber, each traction component is connected to the corresponding first hoisting mechanism and the corresponding second hoisting mechanism, the first hoisting mechanisms are arranged on the first side, and the second hoisting mechanisms are arranged on the second side. By retracting and releasing the traction components using the hoisting mechanisms, the non-closed traction components can be adopted to pull the fixing component and the fractured current collector, thus that the fractured current collector can be automatically transferred to pass through the drying oven on the basis of reducing the lengths of the traction components and reducing occupation in the external space of the drying oven.

Through the following detailed description of exemplary embodiments of the present application with reference to the accompanying drawings, other features and technical effects of the present application will become apparent.

### BRIEF DESCRIPTION OF THE DRAWINGS

In order to more clearly illustrate the technical solution of the embodiments of the present application, the drawings that need to be used in the embodiments of the present application will be briefly introduced below, and it is obvious that the drawings described below are only some embodiments of the present application, and for those skilled in the art, other drawings can also be obtained according to the drawings without paying creative labor.
FIG. 1 is a schematic diagram of a coating device according to one or more embodiments;
FIG. 2 is a schematic diagram of a drying oven system according to one or more embodiments;
FIG. 3 is a schematic diagram of a fractured current collector according to one or more embodiments;
FIG. 4 is a schematic diagram of a fractured collector pushed to both ends of a drying oven according to one or more embodiments;
FIG. 5 is a schematic diagram of a process of a fractured collector automatically passing through a drying oven according to one or more embodiments;
FIG. 6 is a schematic diagram after a process of a fractured collector automatically passing through a drying oven according to one or more embodiments;
FIG. 7 is a schematic diagram of a drying oven system according to one or more embodiments;
FIG. 8 is a schematic diagram of a drying oven system according to one or more embodiments;
FIG. 9 is a schematic diagram of a drying oven system according to one or more embodiments;
FIG. 10 is a schematic diagram of a drying oven system according to one or more embodiments;
FIG. 11 is a schematic diagram of a driving component according to one or more embodiments;
FIG. 12 is a schematic diagram of a driving component according to one or more embodiments;
FIG. 13 is a schematic diagram of a driving component according to one or more embodiments;
FIG. 14 is a schematic diagram of a current collector passing-through control method for a drying oven system according to one or more embodiments;
FIG. 15 is a schematic diagram of a current collector passing-through control method for a drying oven system according to one or more embodiments.

### DETAILED DESCRIPTION

Embodiments of the present application are further described in detail below with reference to the accompanying drawings and embodiments. The following detailed description of the embodiments and the accompanying drawings are used to illustrate the principles of the present application by way of example, but should not be used to limit the scope of the present application, that is, the present application is not limited to the described embodiments.

In the description of the present application, it needs to be noted that unless otherwise specified, "plurality of" means two or more; and the directions or position relationships indicated by the terms "above", "below", "left", "right", "inner", "outer", etc., are only provided to facilitate the description of the present application and simplify the description, rather than indicating or implying that the apparatus or element referred to must have a specific direction, or be constructed and operated in a specific direction, and therefore cannot be construed as limiting the present application. In addition, the terms such as "first," "second" and "third" are only for the purpose of description, and shall not be construed as indicating or implying relative importance. "Vertical" is not vertical in the strict sense, but is within the margin of error allowed. "Parallel" is not vertical in the strict sense, but is within the margin of error allowed.

Moreover, it is to be understood that, for the sake of convenience in description, the dimensions of the various parts shown in the accompanying drawings are not drawn to actual scale.

The following description of at least one exemplary example is in fact illustrative only and in no way serves as any limitation on the present application and its application or use.

Technologies, methods, and devices known to those of ordinary skill in the relevant field may not be discussed in detail, but where appropriate, such technologies, methods, and devices should be considered part of the specification.

In all the examples shown and discussed here, any specific values should be interpreted merely as illustrative, not as limiting. Therefore, other examples of the exemplary embodiment may have different values.

It is to be noted that similar numbers and letters in the following accompanying drawings represent similar items; therefore, once an item is defined in one figure, it does not need to be further discussed in subsequent accompanying drawings.

In order to make the purpose, technical solutions, and technical effects of the present application clearer, the following provides a further detailed description of the present application in conjunction with specific embodiments and with reference to the accompanying drawings.

In related technology, during the coating production process, the current collector needs to maintain a certain tension. This will lead to the possibility of production abnormalities such as the fracturing of the current collector. During the drying process in coating production, various factors will lead to the fracturing of the current collector, and if the fracturing occurs inside the drying oven, the tape connection procedure is as follows: 1, closing a coating valve and stopping coating; 2, stopping the tape movement; 3; turning off a heating system of the drying oven; 4, keeping a fan of the drying oven on, waiting until the temperature in the drying oven decreases below 50°C, and ensuring that the NMP concentration is at a safe level (NMP has mild toxicity); 5, setting the device to a tape connection mode and dragging a front section of the fractured tape out of the drying oven; 6, opening a drying oven door; 7; in the tape connection mode, manually pulling the fractured tape to pass through the drying oven; and 8: outside the drying oven, bonding the fractured tape with tape to recover tape movement. In related technology, it requires maintenance personnel to manually pull the fractured tape to pass through the entire drying oven and perform tape connection outside the drying oven. The process of taping and operation recovery is very complicated and time-consuming, and there are certain safety risks.

In the embodiment of the present application, a traction apparatus passes through a drying chamber, and a fixing component is connected to the traction apparatus, and the traction apparatus and the fixing component are controlled to pull a first fractured section that is fixed to the fixing component to pass through the drying chamber. The traction apparatus passes through the drying oven, with the fixing component connected to the traction apparatus, and by moving the fixing component, the fractured current collector can be pulled to pass through the drying oven, thereby replacing the process in the related technology that the maintenance personnel open the drying oven door and manually pull it to pass through the drying oven.

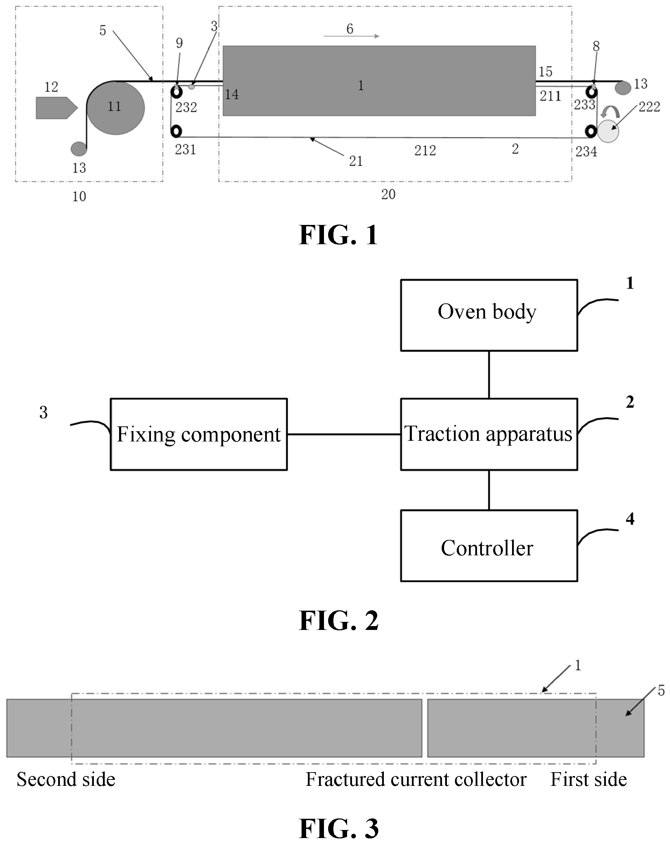

FIG. 1 is a schematic diagram of a coating device according to one or more embodiments. The coating device includes a coating system 10 and a drying oven system 20.

The coating system 10 is configured to coat a current collector 5, namely, to coat a negative/ positive slurry on the current collector. As shown in FIG. 1, the coating system 10 can include a back roller 11, a coating extrusion head 12, and a guide roller 13.

The drying oven system 20 is configured to dry the current collector 5 entering the drying oven.

FIG. 2 is a schematic diagram of a drying oven system according to one or more embodiments. As shown in FIG. 2, the drying oven system includes an oven body 1, a traction apparatus 2, a fixing component 3, and a controller 4.

As shown in FIG. 1, a drying chamber is formed in the oven body 1; and the oven body 1 is provided with a current collector inlet 14 and a current collector outlet 15 which are in communication with the drying chamber.

As shown in FIG. 1, the traction apparatus 2 passes through the drying chamber.

As shown in FIG. 1 and FIG. 2, the fixing component 3 is connected to the traction apparatus 2.

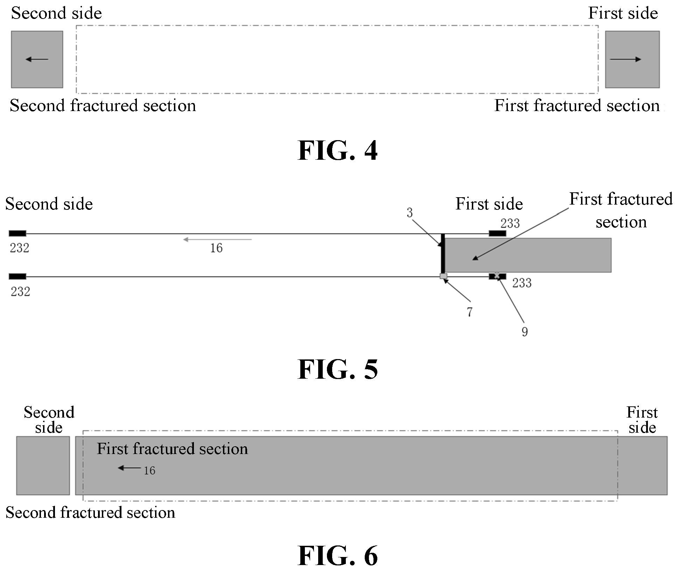

FIG. 3 is a schematic diagram of a fractured current collector according to one or more embodiments. FIG. 4 is a schematic diagram of a fractured collector pushed to both ends of a drying oven according to one or more embodiments. FIG. 5 is a schematic diagram of a process of a fractured collector automatically passing through a drying oven according to one or more embodiments. FIG. 6 is a schematic diagram after a process of a fractured collector automatically passing through a drying oven according to one or more embodiments. FIG. 3 to FIG. 6 are top views of the drying oven system.

In some embodiments, as shown in FIG. 5, the fixing component 3 is a pull rod or a cross bar; and the arrangement direction of the fixing component 3 is perpendicular to a traction component 21, and parallel to a current direction 6 of the current collector. The specific composition and the arrangement direction of the fixing component 3 are limited, the cross bar can be driven through the traction component 21, and the cross bar drives the fractured tape, thus automatically passing the current collector through the drying oven.

As shown in FIG. 1 to FIG. 6, the controller 4 is configured to control the coating system to push the first fractured section of the current collector to a first side outside the oven body and pull the second fractured section of the current collector to a second side outside the oven body (as shown in FIG. 4) when the current collector is fractured (as shown in FIG. 3), in which, the second side is a side opposite to the first side, and the first side or the second side is an current collector inlet side; and the traction apparatus 2 and the fixing component 3 are controlled to pull the first fractured section that is fixed to the fixing component 3 to pass through a drying chamber (as shown in FIG. 5 and FIG. 6), in which, the current collector passing direction 16 is the direction of the first fractured section from the first side to the second side.

In some embodiments, the first sides in FIG. 3 to FIG. 6 can be sides of a current collector inlet 14 as shown in FIG. 1, and the second sides can be sides of a current collector outlet 15 as shown in FIG. 1.

In other embodiments, the second sides in FIG. 3 to FIG. 6 can be the sides of the current collector inlet 14 as shown in FIG. 1, and the first sides can be the sides of the current collector outlet 15 as shown in FIG. 1.

According to the technical solution in the embodiment, a method for performing automatic tape passing after the current collector is fractured in the drying oven is provided. According to the embodiment, the traction apparatus passes through the drying chamber and the fixing component connected to the traction apparatus are arranged and can be controlled to pull the first fractured section, which is fixed to the fixing component, to pass through the drying chamber. The traction apparatus passes through the drying oven, and the fixing component is connected to the traction apparatus; therefore, as the fixing component moves, the fractured current collector is pulled to pass through the drying oven, thereby replacing the process that the maintenance personnel open a drying oven door to manually pull it to pass through the drying oven. As a result, the personnel do not come into direct contact with the drying oven system, greatly reducing the likelihood of potential risks such as high-temperature injuries, NMP exposure, and mechanical crush injuries. On the other hand, because the personnel do not need to contact the drying oven system, the band passing can be performed directly at working temperature, eliminating the process of waiting for the drying oven to cool down and then raise to working temperature, greatly shortening downtime and also significantly reducing heat waste, saving energy.

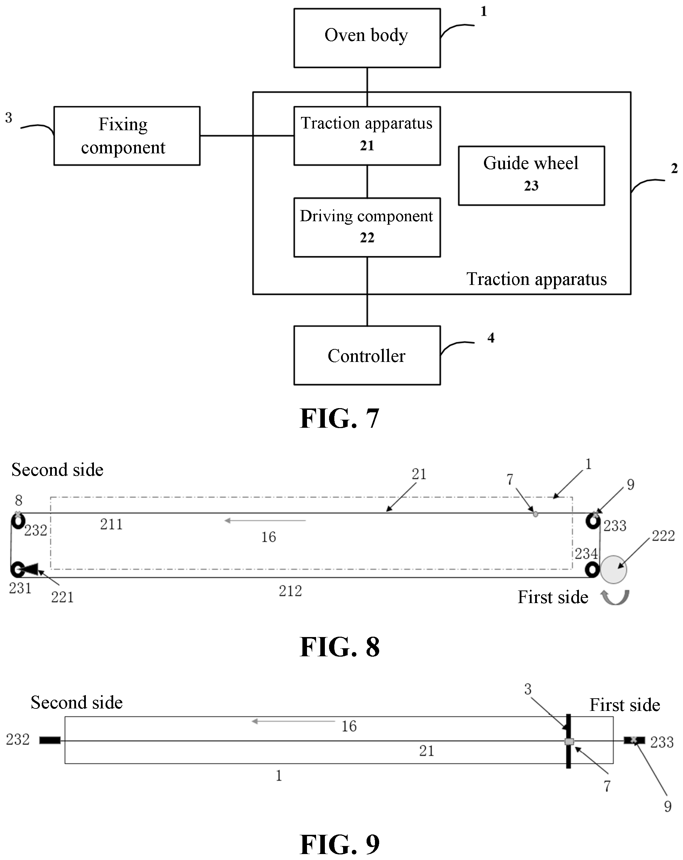

FIG. 7 is a schematic diagram of a drying oven system according to one or more embodiments. Compared with the embodiment as shown in FIG. 2, in the embodiment as shown in FIG. 7, the traction apparatus can include a traction component 21 and a driving component 22.

FIG. 8 is a schematic diagram of a drying oven system according to one or more embodiments. FIG. 8 is a main view of the drying oven system in the embodiment as shown in FIG. 5. As shown in FIG. 1 and FIG. 8, the traction component 21 passes through the drying chamber, and the traction component 21 is parallel to the current direction 6 of the current collector in the drying chamber and is connected to the fixing component 3.

As shown in FIG. 7, the driving component 22 is configured to, according to a control instruction of the controller 4, drive the traction component 21 and the fixing component 3 to move to pull the first fractured section to pass through the drying chamber. In this embodiment, the driving component 22 can drive the traction component 21 and fixing component 3 to move to automatically pass the fractured collector through the drying oven, thereby achieving rapid production recovery while greatly reducing the potential injuries to the maintenance personnel.

In some embodiments, the traction component 21 is a pull rope or a steel cable. In this embodiment, the driving component 22 drives the pull rope, the pull rope drives the cross bar, the cross bar drives the fractured tape, and the fractured tapes is pulled to pass through the drying oven, thus realizing quick production recovery.

FIG. 9 is a schematic diagram of a drying oven system according to one or more embodiments. As shown in FIG. 5, FIG. 9, and FIG. 10, at least one traction component 21 is provided; and as shown in FIG. 9, if one traction component 21 is provided, the traction component 21 is connected to the fixing component 3 at a middle position in a length direction of the fixing component 3. In this embodiment, one traction component 21 is connected to the fixing component 3 at the middle position in the length direction of the fixing component 3. Therefore, the fixing component 3 and the fractured current collector can be pulled only through one traction component 21.

In some embodiments, as shown in FIG. 5, if two traction components 21 are provided, the two traction components 21 are parallel to each other, and are connected to the fixing component 3 from both sides of the fixing component 3 in the length direction. In this embodiment, the two traction components 21 are connected to the fixing component 3 from both sides of the fixing component 3 in the length direction correspondingly, and therefore the two traction components 21 on both sides of the fixing component 3 in the length direction can act together to pull the fixing component 3, and the fixing component 3 and the fractured current collector can be driven more stably.

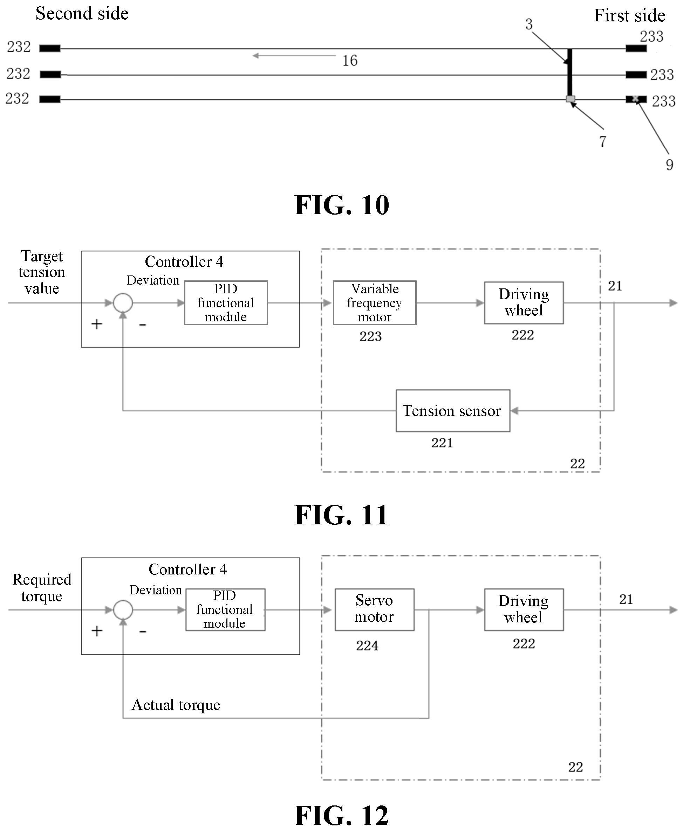

FIG. 10 is a schematic diagram of a drying oven system according to one or more embodiments. As shown in FIG. 10, three traction components 21 are provided. If three traction components 21 are provided, and the at least three traction components 21 are parallel to each other; two traction components 21 are connected to the fixing component 3 from both sides of the fixing component 3 in the length direction, and the other traction components 21 are uniformly connected between both sides of the fixing component 3. In this embodiment, the at least three traction components 21 are uniformly connected to the fixing component 3 in the length direction, and therefore the at least three traction components 21 in the length direction of the fixing component 3 can act together to pull the fixing component 3, and the fixing component 3 and the fractured current collector can be achieved more stably.

In some embodiments, as shown in FIG. 1, FIG. 5, FIG. 8 to FIG. 10, the drying oven system can further include a label 7 and a first label sensor 8.

As shown in FIG. 5, FIG. 8 to FIG. 10, the label 7 is arranged at a position, connected to the fixing component 3, on the traction component 21.

As shown in FIG. 1 and FIG. 8, the first label sensor 8 is arranged on the second side. The first label sensor 8 is configured to detect the label 7 on the traction component 21; the controller 4 is further configured to take down the first fractured section from the fixing component 3 and perform current collector connection on the first fractured section and the second fractured section when the first label sensor 8 detects the label 7 on the traction component 21. In this embodiment, by means of sensing the position of the fixing component 3 using the label sensor, a cross bar fixing component 3 can be positioned, making it convenient to take down the fractured current collector from the fixing component 3 at a tail side of a machine and perform current collector connection on the first fractured section and the second fractured section. Thus, by means of sensing the label 7 through the label sensor, it can be accurately determined that a fractured tape is removed to the outside of the drying oven, such that current collector connection can be performed on the first fractured section and the second fractured section.

In some embodiments, the controller 4 can be further configured to control the driving component 22 to drive the traction component 21 to move after performing current collector connection on the first fractured section and the second fractured section, so as to pull back the fixing component 3 to an initial position on the first side, thus stopping the movement of the traction component 21. In this embodiment, by automatically moving the fixing component 3 back to the initial positions, preparation can be made for the next passing (the fractured current collector passes through the drying oven).

In some embodiments, as shown in FIG. 1, FIG. 5, FIG. 8 to FIG. 10, the drying oven system can further include a second label sensor 9.

The second label sensor 9 is arranged on the first side of the oven body and is configured to detect the label 7 on the traction component 21; and the controller 4 is further configured to determine that the fixing component 3 returns to the initial position on the first side when the second label sensor 9 detects the label 7 on the traction component 21, and stop the movement of the traction component 21. In the embodiments, the position of the fixing component 3 is sensed by the label sensor, thus the fixing component 3 can be automatic positioned with high accuracy, and the fractured tape can be conveniently fixed to the fixing component 3 during next passing.

In some embodiments, the label 7 can be a color code; and both the first label sensor 8 and the second label sensor 9 are color code sensors. In the embodiments, the color code sensors are configured to sense the position of the fixing component 3 to realize automatic positioning of the fixing component 3, making it is convenient to fix the fractured tape on the fixing component 3. The color code sensors are configured to control the fixing part 3 to stop in a tape receiving position before entering the drying oven and a tape connection position after leaving the drying oven.

In some embodiments, the controller 4 can be configured to control the driving component 22 to drive the traction component 21 and the fixing component 3 to move to pull the first fractured section to pass through the drying chamber from the first side to the second side at a constant speed. In the embodiments, the tape passing speed is controlled as a constant speed, thus improving the tape passing success rate and efficiency.

In some embodiments, as shown in FIG. 1 and FIG. 8, the traction component 21 in a closed shape, and the traction component 21 includes a part 211 passing through the drying chamber and a part 212 outside the oven body, and the part 211 passing through the drying chamber and the part 212 outside the oven body form the closed shape.

In some embodiments, as shown in FIG. 1, FIG. 7, and FIG. 8, the traction apparatus further includes guide wheels 23, and each traction component 21 bypasses at least two guide wheels 23. The closed traction components 21 bypass the at least two guide wheels 23 to rotate, thus facilitating the traction components 21 to pull the fixing component 3 and the fractured current collector to move.

In some embodiments, the guide wheels in FIG. 7 can include a first guide wheel 231, a second guide wheel 232, a third guide wheel 233, and a fourth guide wheel 234 in the embodiments as shown in FIG. 1 and FIG. 8. As shown in FIG. 1 and FIG. 8, each traction component 21 bypasses four guide wheels 23 to form a rectangle; the traction component 21 on the upper middle of the rectangle passes through the drying chamber, the traction component 21 on the lower middle of the rectangle is located on the outside bottom of the oven body, the traction component 21 on the left middle of the rectangle is located on the second side outside the oven body, and the traction component 21 on the right middle of the rectangle is located on the first side outside the oven body; the four guide wheels 23 are located at the four vertexes of the rectangle respectively, and in a clockwise direction from the guide wheel 23 below the second side, the four guide wheels 23 are the first guide wheel 231, the second guide wheel 232, the third guide wheel 233, and the fourth guide wheel 234 in sequence; and the first label sensor 8 is arranged on the second guide wheel 232, and the second label sensor 9 is arranged on the third guide wheel 233. In the embodiments, by limiting the positions of the four guide wheels 23 and the label sensors, as the closed rectangular traction components 21 rotate, the fixing component 3 and the fractured current collector 5 can be automatically pulled, making the fractured current collector convenient to pass through the drying oven.

In some embodiments, the driving component can include driving wheels and a motor.

In some embodiments, the driving wheels can be rubber rollers.

In some embodiments, the traction components can be pull ropes or steel cables.

In some embodiments, the fixing component can be a cross bar.

According to the embodiment, two parallel traction components are adopted to pass through the drying oven mechanism and bypass four guide wheels correspondingly. Two parallel closed loops are formed. According to the embodiment, the driving wheels (rubber rollers) are adopted to press the traction components, the motor drives the rubber rollers, the driving wheels drive the traction components to advance through friction force, and the fixing component is arranged between the two traction components. Outside the drying oven, the fractured tape is fixed to the fixing component, the fractured tape is pulled to pass through the drying oven through the fixing component and is connected outside the drying oven, and therefore production can be rapidly recovered, and potential injuries to the maintenance personnel are greatly reduced.

FIG. 11 is a schematic diagram of a driving component according to one or more embodiments. As shown in FIG. 1, FIG. 8, and FIG. 11, the driving component 22 in the embodiment as shown in FIG. 7 can include: a tension sensor 221, driving wheels 222, and a variable frequency motor 223.

As shown in FIG. 8, the tension sensor 221 is arranged on any one of at least two guide wheels 23 that each traction component 21 bypasses and is configured to detect the tension borne by the guide wheel 23.

As shown in FIG. 1 and FIG. 8, each driving wheel 222 is arranged on the outer side of one traction component 21 and is configured to drive the traction component 21 to rotate.

The variable frequency motor 223 is configured to drive the driving wheel to rotate, and then the traction component 21 is driven to rotate.

The controller 4 can be further configured to compare a measured value of the current tension sensor with a target tension value; if the measured value of the current tension sensor is greater than the target tension value, an input control value of the variable frequency motor is reduced; if the measured value of the current tension sensor is less than the target tension value, the input control value of the variable frequency motor is increased to enable the first fractured section to pass through the drying chamber from the first side to the second side at a constant speed.

In some embodiments, as shown in FIG. 11, the controller 4 can include a comparison module and a PID controller module, in which, the comparison module can be configured to compare the measured value of the current tension sensor with the target tension value; and the PID controller module can be configured to reduce thee input control value of the variable frequency motor when the measured value of the current tension sensor is greater than the target tension value, and increase the input control value of the variable frequency motor when the measured value of the current tension sensor is less than the target tension value, so that the first breakage section passes through the drying chamber at the constant speed from the first side to the second side.

According to the embodiments, the traction components 21 are driven through the tension sensor, variable frequency motor, driving wheel and PID (Proportional-Integral-Derivative) control methods; specifically, the tension sensors are configured to detect control over traction force in the traction process, and control the current collector to move at a constant speed, therefore, the risk that the current collector is fractured again when being pulled is greatly reduced, and moreover, the traction speed can be automatically adjusted through closed-loop control over the tension and the traction speed, thus improving the tape passing efficiency.

In some embodiments, as shown in FIG. 1 and FIG. 8, the tension sensor is arranged on the guide wheel 234, closest to the driving wheels, of at least two guide wheels which each traction component 21 bypasses. The tension sensor is arranged on the guide wheel closest to the driving wheels, and therefore control over the speed can be achieved more accurately.

FIG. 12 is a schematic diagram of a driving component according to one or more embodiments. As shown in FIG. 1 and FIG. 12, the driving component 22 can include the driving wheels 222 and the servo motor 224.

Each driving wheel 222 is arranged on the outer side of one traction component 21 and is configured to drive the traction component 21 to rotate.

The servo motor 224 is configured to drive the driving wheels to rotate so as to drive the traction component 21 to rotate.

The controller 4 can be further configured to obtain the current of the servo motor, determine the actual torque value of the servo motor, compare the actual torque value with the needed torque, reduce the current of the servo motor when the actual torque value is greater than the needed torque, and increase the current of the servo motor when the actual torque value is smaller than the needed torque, such that the first fractured section passes through the drying chamber from the first side to the second side at a constant speed.

In some embodiments, as shown in FIG. 12, the controller 4 can include the comparison module and the PID controller module, in which, the comparison module can be configured to obtain the current of the servo motor, determine the actual torque value of the servo motor, and compare the actual torque value with the required torque; and the PID controller module can be configured to reduce the current of the servo motor when the actual torque value is greater than the required torque, and increase the current of the servo motor when the actual torque value is less than the required torque, so that the first fractured section passes through the drying chamber at the constant speed from the first side to the second side.

In the embodiments, the traction components 21 are driven through the servo motor, driving wheel and PID control method; and the driving wheels are driven by the servo motor, the current collector is pulled to pass through the drying chamber in a constant-speed mode, and the pulling force is controlled through the servo torque feedback value. In the embodiments, the current collector can be controlled to move at a constant speed, thus the risk that the current collector is fractured again when being pulled is greatly reduced, the traction speed is automatically adjusted, and the tape passing efficiency is improved. Compared with the tension sensor, variable frequency motor, driving wheel and PID control methods, the process and cost of arranging the tension sensor can be saved.

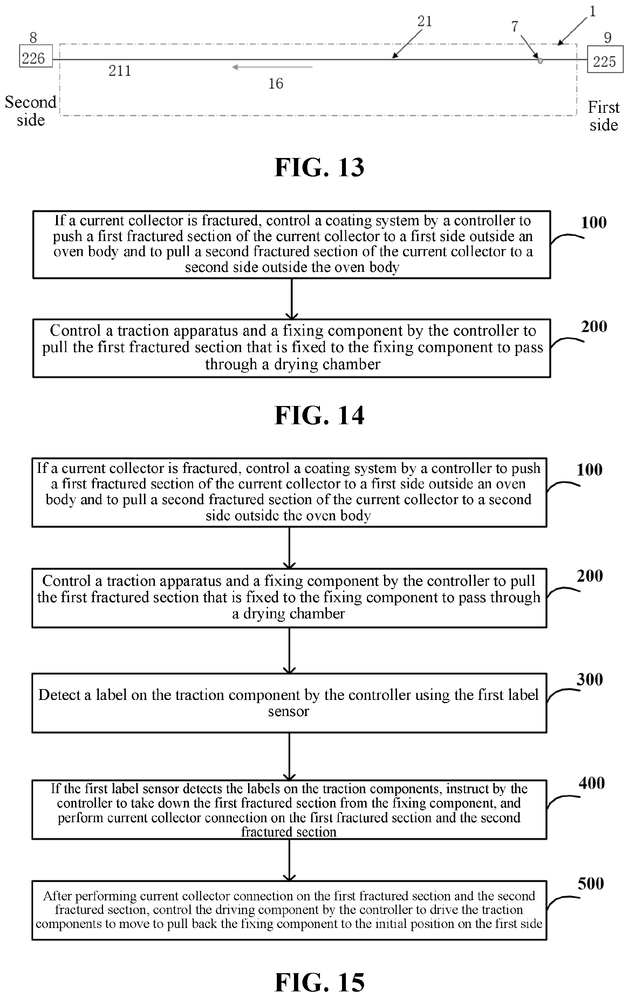

FIG. 13 is a schematic diagram of a driving component according to one or more embodiments. As shown in FIG. 13, the driving component 22 can include first hoisting mechanisms 225 and second hoisting mechanisms 226.

In some embodiments, the traction components 21 are in the non-closed shape, each traction component 21 includes the part passing through the drying chamber; and the driving component 22 includes the first hoisting mechanisms arranged on the first side and the second hoisting mechanisms arranged on the second side, in which, each traction component 21 is connected to one first hoisting mechanism and one second hoisting mechanism.

The controller 4 can be further configured to control the second hoisting mechanisms to retract the traction components 21 and control the first hoisting mechanisms to release the traction components 21 after the first fractured section is fixed to the fixing component 3, and the first fractured section is pulled to pass through the drying chamber by the traction components 21 and the fixing component 3. Each traction component 21 is connected to one hoisting mechanism on the side of the current collector inlet and one hoisting mechanism on the side of the current collector outlet. In the embodiments, by retracting and releasing the traction components 21 using the hoisting mechanisms, the non-closed traction components 21 can be adopted to pull the fixing component 3 and the fractured current collector, thus that the fractured current collector can be automatically transferred to pass through the drying oven on the basis of reducing the lengths of the traction components 21 and reducing occupation in the external space of the drying oven.

In some embodiments, the traction component 21 is a pull rope or a steel cable. In the embodiments, the driving component 22 drives the pull ropes, the pull ropes drive the cross bars, the cross bars drive the fractured tapes, and the fractured tapes are pulled to pass through the drying oven, thus realizing quick production recovery.

According to the embodiments, the cross bar pulls the current collector to pass through the drying oven in the working temperature environment, thus realizing rapid tape connection.

According to the embodiments, the cross bar is controlled by the color code sensor to stay at the tape connection position before entering the drying oven and the tape connection position after leaving the drying oven.

According to the embodiments, the tape passing speed is controlled in a closed-loop mode by the tension sensor, thus improving the tape passing success rate and efficiency.

According to the embodiments, two sets of pull cables are adopted to pass through the drying oven, the cross bar is fixed between the pull cables, and therefore, as the fixing component moves, the fractured tape is pulled to pass through the drying oven, thereby replacing the process that the maintenance personnel open a drying oven door to manually pull it to pass through the drying oven. In the embodiments, on one hand, the personnel do not come into direct contact with the drying oven system, greatly reducing the likelihood of potential risks such as high-temperature injuries, NMP exposure, and mechanical crush injuries. On the other hand, because the personnel do not need to contact the drying oven system, the tape passing can be performed directly at working temperature, eliminating the process of waiting for the drying oven to cool down and then raise to working temperature, greatly shortening downtime and also significantly reducing heat waste, saving energy.

FIG. 14 is a schematic diagram of a current collector passing-through control method for a drying oven system according to one or more embodiments. The embodiment is applied to the drying oven system and can be implemented by the drying oven system or the controller. The current collector passing-through control method for the drying oven system is introduced in detail below. In the embodiment as shown in FIG. 14, the method includes at least one of step 100 and step 200.

Step 100: if the current collector is fractured, control the coating system by the controller to push the first fractured section of the current collector to the first side outside the oven body and to pull the second fractured section of the current collector to the second side outside the oven body, in which, the drying oven system includes the controller and the oven body, the drying chamber is formed in the oven body, the current collector inlet and the current collector outlet which are in communication with the drying chamber are formed in the oven body, the second side is the side opposite to the first side, and the first side or the second side is the current collector inlet side.

In some embodiments, step 100 can include step 110 and step 120.

Step 110: if the tape fracturing occurs in the drying oven, detect that tension is 0 by the tension sensor at a position, out of the drying oven, of the coating device, at the moment, pop up an alarm about the tape fracturing in the drying oven by a touch screen (shown in FIG. 3), and determine whether to start an automatic tape connection mode according to user input or system brake.

Step 120: confirm to start the automatic tape connection mode, operate a coating system to rotate forwards to pull out the front part (the first fractured section) of the fractured tape from the drying oven; and operate the coating system to rotate reversely to pull out the rear part (the second fractured section) of the fractured tape out of the drying oven, as shown in FIG. 4.

Step 200: control the traction apparatus and the fixing component 3 by the controller to pull the first fractured section that is fixed to the fixing component 3 to pass through the drying chamber, in which, the drying oven system also includes the traction apparatus and the fixing component 3, the traction apparatus passes through the drying chamber, and the fixing component 3 is connected to the traction apparatus.

In some embodiments, step 200 can include: controlling the driving component 22 by the controller to drive the traction components 21 and the fixing component 3 to move and pull the first fractured section to pass through the drying chamber, in which, the traction apparatus includes the traction components 21 and the driving component 22, the traction components 21 pass through the drying chamber, are parallel to the current direction 6 of the current collector in the drying chamber, and are connected to the fixing component 3. The driving component 22 is capable of driving the traction components 21 and the fixing component 3 to move to automatically pull the fractured current collector to pass through the drying oven, thereby achieving rapid production recovery and greatly reducing the potential injuries to the maintenance personnel.

In the technical solution of the embodiments, the traction apparatus passes through the drying chamber and the fixing component 3 connected to the traction apparatus are arranged and can be controlled to pull the first fractured section, which is fixed to the fixing component 3, to pass through the drying chamber. The traction apparatus passes through the drying oven, and the fixing component 3 is connected to the traction apparatus; therefore, as the fixing component 3 moves, the fractured current collector is pulled to pass through the drying oven, thereby replacing the process that the maintenance personnel open a drying oven door to manually pull it to pass through the drying oven. As a result, the personnel do not come into direct contact with the drying oven system, greatly reducing the likelihood of potential risks such as high-temperature injuries, NMP exposure, and mechanical crush injuries. On the other hand, because the personnel do not need to contact the drying oven system, the band passing can be performed directly at working temperature, eliminating the process of waiting for the drying oven to cool down and then raise to working temperature, greatly shortening downtime and also significantly reducing heat waste, saving energy.

In some embodiments, step 200 further includes: controlling the driving component 22 by the controller to drive the traction components 21 and the fixing component 3 to move and pull the first fractured section to pass through the drying chamber from the first side to the second side at a constant speed. In the embodiments, the tape passing speed is controlled as a constant speed, thus improving the tape passing success rate and efficiency.

In some embodiments, as shown in FIG. 11, step 200 can include at least one of steps 210 to 240.

Step 210: drive the driving wheels to rotate by the controller using the variable frequency motor so as to drive traction components 21 to rotate, in which, the traction components 21 are closed traction components 21, the traction components 21 include parts passing through the drying chamber and parts outside the oven body, the parts passing through the drying chamber and the parts outside the oven body form the closed shape, and each driving wheel is arranged on the outer side of one traction component 21.

Step 220: detect the tension borne by the guide wheels 23 by the controller using the tension sensors, in which, each traction component 21 bypasses at least two guide wheels 23, and the tension sensors are arranged on any one of the at least two guide wheels 23 which each traction component 21 bypasses.

Step 230: Compare the measured value of the current tension sensor with the target tension value by the controller.

In some embodiments, step 230 can include: acquiring the initial tape speed inputted by a user; and computing the target tension value according to the initial tape passing speed.

In some embodiments, the actual value of the linear tape passing speed is in direct proportion to the output frequency value of the controller, and the measured value of the tension sensors is in direct proportion to the actual value of the linear tape passing speed. Thus, in the embodiments, the linear tape passing speed is converted into frequency output.

For example: the linear speed is converted into frequency output, and the conversion process can include: based on the parameters of an inverter and the motor, outputting the maximum motor speed of 1460 r/min corresponding to the inverter output value of 10,000; setting the PLC control scaling to 1,000, namely, 1,000 corresponds to the inverter output value of 1, so PLC output 10,000*1,000 corresponds to the motor speed of 1460 r/min; and driving the rubber roller (driving wheel) to rotate by the motor using a gear set; 1460 r/min is converted into to linear speed of the rubber roller as: 1460*2*r*Π/K, in which, K is a reduction ratio of the gear set; thus, the linear speed of the rubber roller corresponding to the PLC output frequency value of 10,000*1,000 is: 1460*2*r*Π/K; the PLC output frequency value and the linear speed are proportional, VFD_SV/10,000*1,000= HMI_SV/ (1460*2*r*Π/K); therefore, the PLC frequency output corresponding to any speed: VFD_SV=10,000*1,000*HMI_SV*K/(1460*2*r*Π); and a system PID function block (as shown in FIG. 11) is utilized to fine-tune the frequency, and thus the final output frequency is obtained: VFD_OUT.

Step 240: if the measured value of the current tension sensor is greater than the target tension value, reduce the input control value of the variable frequency motor by the controller; and if the measured value of the current tension sensor is less than the target tension value, increase the input control value of the variable frequency motor by the controller to enable the first fractured section to pass through the drying chamber at a constant speed from the first side to the second side.

According to the embodiments, the traction components 21 are driven through the tension sensor, variable frequency motor, driving wheel and PID control method, specifically, the tension sensor is configured to detect control over traction force in the traction process, and control the current collector to move at a constant speed, therefore, the risk that the current collector is fractured again when being pulled is greatly reduced, and moreover, the traction speed can be automatically adjusted through closed-loop control over the tension and the traction speed, thus improving the tape passing efficiency.

In some embodiments, as shown in FIG. 12, step 200 can include at least one of steps 250 to 280.

Step 250: drive the driving wheels to rotate by the controller using the servo motor, and then drive the traction components 21 to rotate, in which, the traction components 21 are in a closed shape, each traction component 21 includes the part passing through the drying chamber and the part outside the oven body, the part passing through the drying chamber and the part outside the oven body form the closed shape, each driving wheel is arranged on the outer side of the corresponding traction component 21, and each traction component 21 bypasses at least two guide wheels 23.

Step 260: obtain the current of the servo motor by the controller, and determine the actual torque value of the servo motor.

Step 270: compare the actual torque value with the needed torque by the controller.

Step 280: if the actual torque value is greater than the needed torque, reduce the current of the servo motor by the controller; and if the actual torque value is less than the needed torque, increase the current of the servo motor by the controller to enable the first fractured section to pass through the drying chamber at the constant speed from the first side to the second side.

In some embodiments, as shown in FIG. 1, the traction components can be the pull ropes, the fixing component 3 can be the cross bar, the label 7 can be the color code, the color code is pasted at the position, connected to the cross bar, of the pull rope, and both the second label sensor 9 and the first label sensor 8 can be the color code sensors. According to the embodiments, the servo motor drives the stay rope at the constant speed, and a pull rod is driven to pass through the drying oven. The servo motor operates in a torque mode. If the torque reaches a set protection value, the servo motor stops operating, abnormity is checked manually, and whether to continue tape passing or perform tape passing again is determined.

In some embodiments, steps 250 to 280 can include: setting an initial speed, and protecting the torque; starting tape passing (making the current collector pass through); determining whether the shaft state is normal; if the shaft state is normal, starting an unwinding reel; after delaying a preset time interval, starting the servo motor for tape passing; determining whether the servo torque is greater than the protection torque; if the servo torque is greater than the protection torque, determining that tape passing fails; determining whether the first label sensor senses the label; if the first label sensor senses the label, determining that tape passing succeeds; if the first label sensor cannot sense the label, determining that tape passing fails; and if tape passing succeeds or fails, stopping the unwinding reel and the servo motor for tape passing, and finishing tape passing.

In the embodiments, the traction components 21 are driven through the servo motor, driving wheel and PID control method; and the driving wheels are driven by the servo motor, the current collector is pulled to pass through the drying chamber in a constant-speed mode, and the pulling force is controlled through the servo torque feedback value. In the embodiments, the current collector can be controlled to move at a constant speed, thus the risk that the current collector is fractured again when being pulled is greatly reduced, the traction speed is automatically adjusted, and the tape passing efficiency is improved. Compared with the tension sensor, variable frequency motor, driving wheel and PID control methods, the process and cost of arranging the tension sensor can be saved.

In some embodiments, step 200 can include: as shown in FIG. 11, after fixing the first fractured section to the fixing component 3, controlling the second hoisting mechanism by the controller to retract the traction components 21, controlling the first hoisting mechanism to release the traction components 21, and pulling the first fractured section to pass through the drying chamber through the traction components 21 and the fixing component 3, in which, the traction components 21 are in the non-closed shape, each traction component 21 includes the part passing through the drying chamber, each traction component 21 is connected to the corresponding first hoisting mechanism and the corresponding second hoisting mechanism, the first hoisting mechanisms are arranged on the first side, and the second hoisting mechanisms are arranged on the second side. In the embodiments, by retracting and releasing the traction components 21 using the hoisting mechanisms, the non-closed traction components 21 can be adopted to pull the fixing component 3 and the fractured current collector, thus that the fractured current collector can be automatically transferred to pass through the drying oven on the basis of reducing the lengths of the traction components 21 and reducing occupation in the external space of the drying oven.

FIG. 15 is a schematic diagram of a current collector passing-through control method for a drying oven system according to one or more embodiments. The embodiment is applied to the drying oven system and can be implemented by the drying oven system or the controller. The embodiment as shown in FIG. 15 can include at least one of step 100 and step 200 and includes at least one of step 300 to step 500.

Step 300: detect the labels 7 on the traction components 21 by the controller using the first label sensor 8, in which, the labels 7 are arranged at the position, connected to the fixing component 3, on each traction component 21, and the first label sensor 8 is arranged on the second side.

Step 400: if the first label sensor 8 detects the labels 7 on the traction components 21, instruct by the controller to take down the first fractured section from the fixing component 3, and perform current collector connection on the first fractured section and the second fractured section. Thus, by means of sensing the label 7 through the label sensor, it can be accurately determined that a fractured tape is removed to the outside of the drying oven, such that current collector connection can be performed on the first fractured section and the second fractured section.

Step 500: after performing current collector connection on the first fractured section and the second fractured section, control the driving component 22 by the controller to drive the traction components 21 to move to pull back the fixing component 3 to the initial position on the first side, and then stop the movement of the traction components 21.

In some embodiments, in step 500, the pulling back the fixing component 3 to the initial position on the first side can include: detecting the labels 7 on the traction components 21 by the controller using the second label sensor 9, in which, the second label sensor 9 is arranged on the first side; and if the second label sensor 9 detects the labels 7 on the traction components 21, determining by the controller that the fixing component 3 returns to the initial position on the first side, and stopping the movement of the traction components 21. In the embodiments, the fixing component 3 automatically moves back to the initial position, and thus preparation can be made for passing the current collector fractured next time through the drying oven.

In some embodiments, as shown in FIG. 1 and FIG. 8, the traction components can be the pull ropes, the fixing component 3 can be the cross bar, the labels 7 can be the color codes, the color codes are pasted to the positions, connected to the cross bar, of the pull ropes, both the second label sensor 9 and the first label sensor 8 can be the color code sensors, the first side can be a machine head (the current collector inlet), and the second side can be a machine tail (the current collector outlet). Steps 200 to 500 can include: at the machine head, fixing the rear section of the fractured tape to the cross bar, and then starting the driving wheels to rotate forwards. The cross bar drives the current collector to pass through the drying oven. During the advancing process of the cross bar, the advancing speed is automatically adjusted through the tension value fed back by the tension sensor. If the color code sensor at the machine tail senses the color code, the driving wheels stop rotating forwards; at the machine tail, the fractured tape is taken down from the cross bar and is pasted to the front end of the fractured tape. Then, the driving wheels are operated to rotate reversely, the cross bar returns to the initial position of the machine head, and if the color code sensor at the machine head senses the color code, the driving wheels stop rotating reversely, and automatic tape passing is finished.

Those skilled in the art can understand that, in the above method of specific embodiments, the order in which the steps are written does not imply a strict execution sequence nor impose any limitation on real-time processes, and the specific execution order of each step should be determined based on its function and possible inherent logic.

The above description of various embodiments tends to emphasize the differences between each embodiment, and their similarities or common features can be cross-referenced. For the sake of brevity, they will not be repeated here.

At this point, the present application has been described in detail. In order to avoid obscuring the conception of the present application, some details that are well known in the art are not described. Those skilled in the art can fully understand how to implement the technical solution disclosed here based on the description above.

The method and system in the present application may be implemented in many ways. For example, the method and system in the present application can be implemented through software, hardware, firmware, or any combination of software, hardware, and firmware. The above sequence of steps for the method is for illustrative purposes only, and the steps of the method in the present application are not limited to the order specifically described above, unless otherwise specifically stated. In addition, in some embodiments, the present application can also be implemented as programs recorded on a recording medium, which programs include machine-readable instructions for implementing the methods according to the present application. Accordingly, the present application also covers the recording medium for storing the program used for executing the method according to the present application.

Although some specific embodiments in the present application have been described in detail through examples, those skilled in the art should understand that the above examples are provided for illustration purposes only and are not intended to limit the scope of the present application. Those skilled in the art should understand that the above embodiments can be modified without departing from the scope and spirit of the present application. The scope of the present application is defined by the accompanying claims.

## Claims

1. A drying oven system, comprising:
an oven body in which a drying chamber is formed, a current collector inlet and a current collector outlet which are in communication with the drying chamber being formed in the oven body;
a traction apparatus passing through the drying chamber;
a fixing component connected to the traction apparatus; and
a controller configured to control, when a current collector is fractured, a coating system to push a first fractured section of the current collector out to a first side outside the oven body and pull a second fractured section of the current collector out to a second side outside the oven body, wherein the second side is a side opposite to the first side, and the first side or the second side is a current collector inlet side; and control the traction apparatus and the fixing component to pull the first fractured section that is fixed to the fixing component to pass through the drying chamber.

2. The drying oven system according to claim 1, wherein the traction apparatus comprises:
a traction component which passes through the drying chamber, is parallel to a current direction of the current collector in the drying chamber and is connected to the fixing component; and
a driving component which is configured to, according to a control instruction of the controller, drive the traction component and the fixing component to move to pull the first fractured section to pass through the drying chamber.

3. The drying oven system according to claim 2, further comprising:
a label which is arranged on the traction component at a position connected to the fixing component; and
a first label sensor which is arranged on the second side and configured to detect the label on the traction component, wherein
the controller is further configured to take down the first fractured section from the fixing component and perform current collector connection on the first fractured section and the second fractured section when the first label sensor detects the label on the traction component.

4. The drying oven system according to claim 3, wherein
the controller is further configured to control the driving component to drive the traction component to move after performing current collector connection on the first fractured section and the second fractured section, so as to pull back the fixing component to an initial position on the first side and stop the movement of the traction component.

5. The drying oven system according to claim 4, further comprising:
a second label sensor which is arranged on the first side and configured to detect the label on the traction component, wherein the controller is further configured to determine that the fixing component returns to the initial position on the first side when the second label sensor detects the label on the traction component, and stop the movement of the traction component.

6. The drying oven system according to claim 5, wherein
the label can be a color code; and
both the first label sensor and the second label sensor are color code sensors.

7. The drying oven system according to any one of claims 2 to 6, wherein
the controller can be configured to control the driving component to drive the traction component and the fixing component to move to pull the first fractured section to pass through the drying chamber from the first side to the second side at a constant speed.

8. The drying oven system according to any one of claims 2 to 6, wherein
the fixing component can be a pull rod or a cross bar; and the arrangement direction of the fixing component is perpendicular to the traction component and parallel to the current direction of the current collector.

9. The drying oven system according to claim 8, wherein
at least one traction component is provided; and if one traction component is provided, the traction component is connected to the fixing component at a middle position in a length direction of the fixing component;
or,
if two traction components are provided, the two traction components are parallel to each other, and are connected to the fixing component from both sides of the fixing component in the length direction;
or,
if three traction components are provided, and the at least three traction components are parallel to each other; two traction components are connected to the fixing component from both sides of the fixing component in the length direction, and the other traction components are uniformly connected between both sides of the fixing component.

10. The drying oven system according to any one of claims 2 to 6, wherein
the traction components are in a closed shape, and the traction components comprise parts passing through the drying chamber and parts outside the oven body, and the parts passing through the drying chamber and the parts outside the oven body form the closed shape;
the traction apparatus further comprises:
guide wheels, and each traction component bypasses at least two guide wheels.

11. The drying oven system according to claim 10, wherein
each traction component bypasses four guide wheels to form a rectangle; the traction component on the upper middle of the rectangle passes through the drying chamber, the traction component on the lower middle of the rectangle is located on the outside bottom of the oven body, the traction component on the left middle of the rectangle is located on the second side outside the oven body, and the traction component on the right middle of the rectangle is located on the first side outside the oven body;
the four guide wheels are located at the four vertexes of the rectangle respectively, and in a clockwise direction from the guide wheel below the second side, the four guide wheels are a first guide wheel, a second guide wheel, a third guide wheel, and a fourth guide wheel in sequence; and
the first label sensor is arranged on the second guide wheel, and the second label sensor is arranged on the third guide wheel.

12. The drying oven system according to claim 10, wherein the driving component comprises:
a tension sensor which is arranged on any one of the at least two guide wheels which each traction component bypasses and is configured to detect the tension borne by the guide wheel;
driving wheels, each diving wheel being arranged on the outer side of one traction component and configured to drive the traction component to rotate; and
a variable frequency motor which is configured to drive the driving wheels to rotate and then drive the traction components to rotate;
the controller is further configured to compare a measured value of the current tension sensor with a target tension value; if the measured value of the current tension sensor is greater than the target tension value, an input control value of the variable frequency motor is reduced; and if the measured value of the current tension sensor is less than the target tension value, the input control value of the variable frequency motor is increased to enable the first fractured section to pass through the drying chamber from the first side to the second side at a constant speed.

13. The drying oven system according to claim 12, wherein the tension sensor is arranged on the guide wheel, closest to the driving wheels, of at least two guide wheels which each traction component bypasses.

14. The drying oven system according to claim 10, wherein the driving component comprises:
driving wheels, each diving wheel being arranged on the outer side of one traction component and configured to drive the traction component to rotate; and
a servo motor which is configured to drive the driving wheels to rotate and then drive the traction components to rotate;
the controller is further configured to obtain the current of the servo motor, determine the actual torque value of the servo motor, compare the actual torque value with the needed torque, reduce the current of the servo motor when the actual torque value is greater than the needed torque, and increase the current of the servo motor when the actual torque value is smaller than the needed torque to enable the first fractured section to pass through the drying chamber from the first side to the second side at a constant speed.

15. The drying oven system according to any one of claims 2 to 6, wherein
the traction components are in a non-closed shape, and the traction components comprise parts passing through the drying chamber;
the driving component comprises:
first hoisting mechanisms arranged on the first side; and
second hoisting mechanisms arranged on the second side;
each traction component is connected to one first hoisting mechanism and one second hoisting mechanism; and the controller is further configured to control the second hoisting mechanisms to retract the traction components and control the first hoisting mechanisms to release the traction components after the first fractured section is fixed to the fixing component, and the first fractured section is pulled to pass through the drying chamber by the traction components and the fixing component.

16. The drying oven system according to any one of claims 2 to 6, wherein
the traction components are pull ropes or steel cables.

17. A current collector passing-through control method for a drying oven system, comprising:
if the current collector is fractured, controlling the coating system by the controller to push the first fractured section of the current collector to the first side outside the oven body and to pull the second fractured section of the current collector to the second side outside the oven body, in which, the drying oven system comprises the controller and the oven body, the drying chamber is formed in the oven body, the current collector inlet and the current collector outlet which are in communication with the drying chamber are formed in the oven body, the second side is the side opposite to the first side, and the first side or the second side is the current collector inlet side; and
controlling the traction apparatus and the fixing component by the controller to pull the first fractured section that is fixed to the fixing component to pass through the drying chamber, in which, the drying oven system also comprises the traction apparatus and the fixing component, the traction apparatus passes through the drying chamber, and the fixing component is connected to the traction apparatus.

18. The current collector passing-through control method for a drying oven system according to claim 17, wherein the controlling the traction apparatus and the fixing component to pull the first fractured section that is fixed to the fixing component to pass through the drying chamber comprises:
controlling the driving component by the controller to drive the traction components and the fixing component to move and pull the first fractured section to pass through the drying chamber, in which, the traction apparatus comprises the traction components and the driving component, and the traction components pass through the drying chamber, are parallel to the current direction of the current collector in the drying chamber, and are connected to the fixing component.

19. The current collector passing-through control method for a drying oven system according to claim 18, further comprising:
detecting the labels on the traction components by the controller using the first label sensor, in which, the labels are arranged at the position, connected to the fixing component, on each traction component, and the first label sensor is arranged on the second side; and
if the first label sensor detects the labels on the traction components, instructing by the controller to take down the first fractured section from the fixing component, and performing current collector connection on the first fractured section and the second fractured section.

20. The current collector passing-through control method for a drying oven system according to claim 19, further comprising:
after performing current collector connection on the first fractured section and the second fractured section, controlling the driving component by the controller to drive the traction components to move to pull back the fixing component to the initial position on the first side, and stopping the movement of the traction components.

21. The current collector passing-through control method for a drying oven system according to claim 20, wherein the pulling back the fixing component to the initial position on the first side comprises:
detecting the labels on the traction components by the controller using the second label sensor, in which, the second label sensor is arranged on the first side; and
if the second label sensor detects the labels on the traction components, determining by the controller that the fixing component returns to the initial position on the first side, and stopping the movement of the traction components.

22. The current collector passing-through control method for a drying oven system according to any one of claims 18 to 21, wherein the controlling the traction components and the fixing component by the controller to pass the first fractured section that is fixed to the fixing component to pass through the drying chamber comprises:
controlling the driving component by the controller to drive the traction components and the fixing component to move and pull the first fractured section to pass through the drying chamber from the first side to the second side at a constant speed.

23. The current collector passing-through control method for a drying oven system according to claim 22, wherein the pulling the first fractured section to pass through the drying chamber at the constant speed from the first side to the second side comprises:
driving the driving wheels to rotate by the controller using the variable frequency motor so as to drive traction components to rotate, in which, the traction components are closed traction components, the traction components comprise parts passing through the drying chamber and parts outside the oven body, the parts passing through the drying chamber and the parts outside the oven body form the closed shape, and each driving wheel is arranged on the outer side of one traction component;
detecting the tension borne by the guide wheels by the controller using the tension sensors, in which, each traction component bypasses at least two guide wheels, and the tension sensors are arranged on any one of the at least two guide wheels which each traction component bypasses;
comparing the measured value of the current tension sensor with the target tension value by the controller;
if the measured value of the current tension sensor is greater than the target tension value, reducing the input control value of the variable frequency motor by the controller; and
if the measured value of the current tension sensor is less than the target tension value, increasing the input control value of the variable frequency motor by the controller to enable the first fractured section to pass through the drying chamber at a constant speed from the first side to the second side.

24. The current collector passing-through control method for a drying oven system according to claim 22, wherein the pulling the first fractured section to pass through the drying chamber at the constant speed from the first side to the second side comprises:
driving the driving wheels to rotate by the controller using the servo motor, and then driving the traction components to rotate, in which, the traction components are in a closed shape, each traction component comprises the part passing through the drying chamber and the part outside the oven body, the part passing through the drying chamber and the part outside the oven body form the closed shape, each driving wheel is arranged on the outer side of the corresponding traction component, and each traction component bypasses at least two guide wheels;
obtaining the current of the servo motor by the controller, and determining the actual torque value of the servo motor;
comparing the actual torque value with the needed torque by the controller;
if the actual torque value is greater than the needed torque, reducing the current of the servo motor by the controller; and
if the actual torque value is less than the needed torque, increasing the current of the servo motor by the controller to enable the first fractured section to pass through the drying chamber at the constant speed from the first side to the second side.

25. The current collector passing-through control method for a drying oven system according to any one of claims 18 to 21, wherein the controlling the traction component and the fixing component by the controller to pull the first fractured section to pass through the drying chamber comprises:
after fixing the first fractured section to the fixing component, controlling the second hoisting mechanism by the controller to retract the traction components, controlling the first hoisting mechanism to release the traction components, and pulling the first fractured section to pass through the drying chamber through the traction components and the fixing component, in which, the traction components are in the non-closed shape, each traction component comprises the part passing through the drying chamber, each traction component is connected to the corresponding first hoisting mechanism and the corresponding second hoisting mechanism, the first hoisting mechanisms are arranged on the first side, and the second hoisting mechanisms are arranged on the second side.
